# EUROPÄISCHE PATENTANMELDUNG

(11) **EP 2 057 924 A1**
(43) Veröffentlichungstag der Anmeldung: **13.05.2009**
(21) Anmeldenummer: 08168276.7
(22) Anmeldetag: 04.11.2008
(51) Int. Cl.: A47J 36/02, A47J 37/10, A47J 45/00

(54) **Kochhilfsmittel**

(30) Priorität: 09.11.2007 AT 6802007 U
(71) Anmelder: Redolfi, Werner, 1060 Wien (AT); Österreicher, Helmut, 1110 Wien (AT)
(72) Erfinder: Redolfi, Werner, 1060 Wien (AT); Österreicher, Helmut, 1110 Wien (AT)
(74) Vertreter: Laminger, Norbert

(57) **Zusammenfassung**

Ein Kochhilfsmittel zum Niederdrücken des Kochgutes in einem Kochbehälter, auf einer Grillplatte oder beim Marinieren von Lebensmitteln, insbesondere während des Garvorganges, besteht aus einer Grundplatte (1) aus wärmespeicherndem Material, vorzugsweise Edelstahl oder Chrom-Nickelstahl 18/10, welche Grundplatte (1) in Größe und Form an den Kochbehälter oder an Gastro-Norm-Behälter angepasst ist, und einem Griff (2, 3).

Um einen für den Koch einfacheren und leichter dosierbaren Einsatz zu ermöglichen und einen optimierten, schonenden Garvorgang zu gewährleisten, ist vorgesehen, daß das Flächengewicht über die Grundplatte (1) des Kochhilfsmittels zwischen 2 und 4 g/cm² beträgt.

## Beschreibung

Die Erfindung betrifft ein Kochhilfsmittel zum Niederdrücken des Kochgutes in einem Kochbehälter, auf einer Grillplatte oder beim Marinieren von Lebensmitteln, insbesondere während des Garvorganges, bestehend aus einer Grundplatte aus wärmeleitfähigem Material, vorzugsweise Edelstahl oder Chrom-Nickelstahl 18/10, welche Grundplatte in Größe und Form an den Kochbehälter oder an Gastro-Norm-Behälter angepasst ist, und einem Griff.

Beim Garen, speziell Grillen oder Braten, oder beim Marinieren von flachen oder in flache Form gebrachten Lebensmitteln, insbesondere von Fleisch , Fisch und Gemüse, tritt der Effekt auf, dass sich diese flachen Stücke aufwölben und dadurch ungleich gegart werden. Auch optisch wirkt sich dieser Effekt durch ungleiche Färbung des Kochgutes nachteilig aus. In vielen Rezepten wird daher das Niederdrücken des Kochgutes mittels Kochlöffeln, Pfannenwendern bzw. - hebern, ja sogar mittels weiterer Pfannen oder Töpfe, empfohlen. Ein speziell für diesen Zweck ausgestalteter Pfannenwender mit Bügel zum Verspannen mit dem Pfannenrand ist in der US 2 676 830 A geoffenbart.

Professioneller wird in manchen Profiküchen gearbeitet, wo etwa das Kochgut mit Edelstahlscheiben beschwert wird, an deren Ende sich Metallgriffe befinden. Ein speziell zum Einsatz mit Pfannen und Töpfen bestimmtes Kochhilfsmittel ist beispielsweise in der US 2004255792 A geoffenbart und besteht aus einer Grundplatte aus wärmespeicherndem Material, die in Größe und Form an den Kochbehälter angepasst ist, sowie einem Griff. Durch das wärmeleitfähige Material wird - neben der Wirkung des Niederhaltens und Verhinderung des Aufwölbens - auch eine zusätzliche Wärmezufuhr und Garwirkung von der Oberseite des Kochgutes her erzielt. Allerdings ist keinerlei Angabe über das Gewicht dieses Kochhilfsmittels oder den notwendigen Anpressdruck zu finden, so daß der jeweilige Koch das Kochhilfsmittel auf das Kochgut pressen und den Druck über eine bestimmte Zeit aufrecht erhalten muß, was aber kaum in gleichmäßiger Weise möglich ist. Letzeres gilt auch für die Spiegeleibrathilfe gemäß der DE20 2007 007632 U, die aus einer Fläche besteht, die in einer Bratpfanne oder dgl. beabstandet über einem Spiegelei platziert werden kann und mit mindestens einer Durchgangsöffnung versehen ist.

Die Aufgabe der vorliegenden Erfindung war nun eine Verbesserung eines derartigen Kochhilfsmittels, um damit einen für den Koch einfacheren und leichter dosierbaren Einsatz zu ermöglichen und einen optimierten, schonenden Garvorgang zu gewährleisten.

Zur Lösung dieser Aufgabe ist das Kochhilfsmittel erfindungsgemäß dadurch gekennzeichnet, daß das Flächengewicht über die Grundplatte des Kochhilfsmittels zwischen 2 und 4 g/cm² beträgt. Dieses Flächengewicht hat sich für alle Lebensmittel als vorteilhaft herausgestellt und gewährleistet ein sicheres Niederhalten mit Verhinderung des Aufwölbens des Kochgutes, ohne jedoch zu stark auf das Kochgut einzuwirken und beispielsweise durch Herauspressen des Saftes ein Austrocknen zu bewirken.

Gemäß einer vorteilhaften Ausführungsform der Erfindung sind in der Grundplatte mehrere Dampföffnungen vorgesehen, deren geringster Durchmesser mindestens 6 mm beträgt. Durch diese Dampföffnungen, die aufgrund des Mindestdurchmessers einfach und sicher zu reinigen sind, können das Kochgut und auch dessen Garungsfortschritt auch bei aufgelegtem Kochhilfsmittel begutachtet werden. Auch kann Dampf gezielt abströmen, was den Garvorgang weiter optimiert.

Eine weitere vorteilhafte Ausgestaltung sieht dabei vor, daß die Gesamtfläche der Dampföffnungen zwischen 2,5 und 6 % der Fläche der Grundplatte ausmacht.

Um sowohl gute Handhabung als auch die Einhaltung der Hygieneanforderungen zu gewährleisten, ist die Anbringung des Griffes dadurch bewerkstelligt, daß in der Grundplatte ein Bolzen aus Edelstahl mit einem glatten Ende eingeschweißt ist, welcher Bolzen am gegenüberliegenden Ende ein Außengewinde aufweist.

Vorzugsweise ist weiters vorgesehen, daß ein Griffstück aus Edelstahl auf das Außengewinde des Bolzens aufgeschraubt ist.

Gemäß einer vorteilhaften Ausführungsform dieser Griffgestaltung ist weiters vorgesehen, daß das Griffstück am Bolzen dicht mit lebensmittelverträglichem Kleber verklebt ist.

In der nachfolgenden Beschreibung soll die Erfindung näher erläutert werden, wobei auch Bezug auf die beigeschlossenen perspektivischen Ansichten von Ausführungsbeispielen des erfindungsgemäßen Kochhilfsmittels genommen wird.

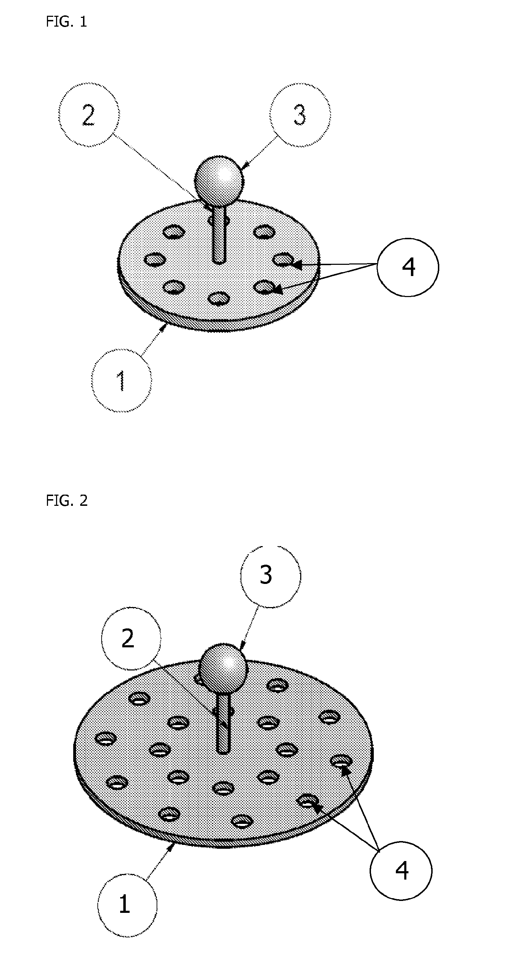

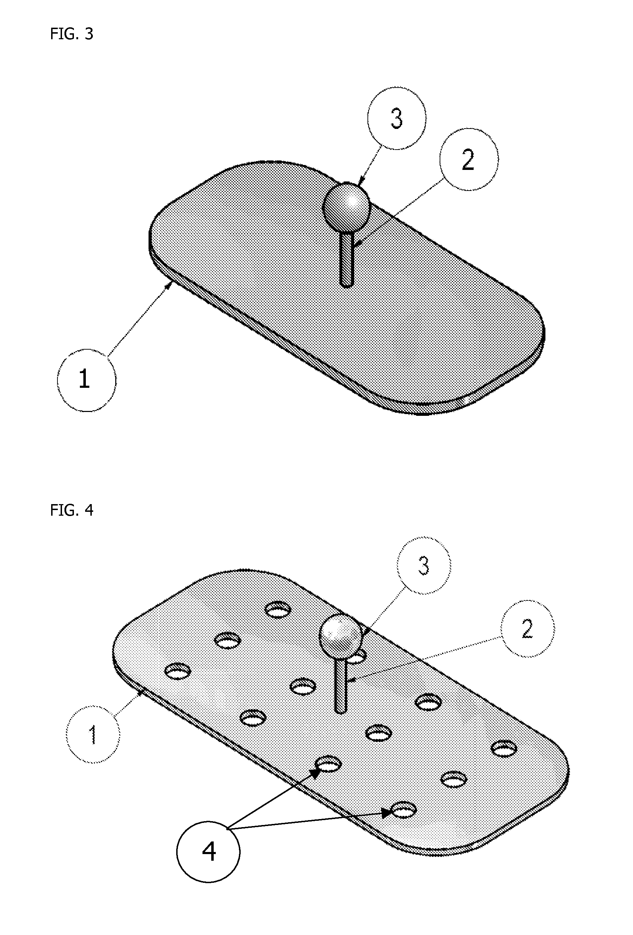

Die Fig. 1 zeigt eine Ausführungsform mit runder Grundplatte und Dampföffnungen, Fig. 2 ist eine Darstellung einer etwas größeren runden Ausführungsform, ebenfalls mit Dampföffnungen, und Fig. 3 zeigt eine Ausführungsform mit rechteckiger Grundplatte ohne Dampföffnungen.

Das in Fig. 1 beispielhaft dargestellte Kochhilfsmittel besteht aus einer Grundplatte 1 aus wärmeleitfähigem Material, vorzugsweise aus Edelstahl, beispielsweise CNS 18/10, welche Grundplatte 1 in Größe und Form vorzugsweise an den Kochbehälter angepasst ist, und einem Griff 2, 3. Das Flächengewicht über die Fläche der Grundplatte 1 beträgt zwischen 2 und 4 g/cm², wobei die Dicke der Grundplatte vorzugsweise zwischen 3 und 6 mm beträgt. Je nach Durchmesser und Dicke wird so ein Gesamtgewicht zwischen 300 und 3000 Gramm erreicht. Die in Fig. 1 dargestellte Ausführungsform wird in einer Größe im Bereich von 100 bis 400 mm Durchmesser angefertigt, um für die gängigen Pfannen und Töpfe passend vorzuliegen.

Vorzugsweise sind in der Grundplatte 1 mehrere Dampföffnungen 4 vorgesehen, deren geringster Durchmesser mindestens 6 mm beträgt. Dabei wird vorteilhafterweise die Gesamtfläche der vorzugsweise in einem konzentrischen Ring angeordneten Dampföffnungen 4 zwischen 2,5 und 6 % der Fläche der Grundplatte ausmachen. Bei größeren Dimensionen der Grundplatte 1 können die Dampföffnungen 4 auch in mehreren konzentrischen Ringen mit unterschiedlichem Durchmesser angeordnet sein, wie beispielhaft in Fig. 2 zu sehen ist.

Als Griff 2, 3 ist in der Grundplatte 1 ein Bolzen 2 aus CNS mit einer Länge zwischen etwa 40 und 120 mm, ebenfalls vorzugsweise aus Edelstahl, montiert, welcher Bolzen 2 mit einem glatten Ende in der Grundplatte 1 eingeschweißt ist. Am der Grundplatte 1 gegenüberliegenden Ende weist der Bolzen 2 auf einer Länge von ca. 5 mm ein Außengewinde auf, auf dem ein vorzugsweise ebenfalls aus Edelstahl bestehendes Griffstück 3 aufgeschraubt und allenfalls noch dicht mit lebensmittelverträglichem Kleber verklebt ist.

Fig. 3 zeigt eine weitere erfindungsgemäße Ausführungsform des Kochhilfsmittels, diesmal mit einer abgerundeten, rechteckige Grundplatte 1, die wieder vorzugsweise aus CNS 18/10 und in einer Dicke zwischen 3 und 6 mm ausgeführt ist. Diese weist eine komplett geschlossene Grundplatte 1 ohne Dampföffnungen auf, welche Ausführungsform selbstverständlich auch für die runden Varianten möglich ist.

Die Dimensionen der Grundplatte 1 werden vorzugsweise passend zu Gastro-Norm-Behältern der Größen ¼, 1/3, ½, 2/3 und 1/1 ausgeführt, wobei die Größe der Fläche der Grundplatte 1 so gewählt wird, dass sie bei einer Tiefe der Gastro-Norm-Behälter von 200 mm bis auf deren Boden eingeführt werden kann.

Auch die rechteckigen Kochhilfsmittel wie etwa in Fig. 3 besitzen einen Griff 2, 3, bestehend aus einem CNS- Gewindebolzen mit ca. 40 bis 120 mm Länge, der durch die Grundplatte 1 gesteckt und an der Bodenfläche dicht verschweißt ist, und auf dessen Gewindeabschnitt von ca. 5 mm Länge ein Griffstück 3 CNS aufgeschraubt und dicht verklebt ist.

Wie in Fig. 4 gezeigt ist, können natürlich auch die im wesentlichen rechteckigen Ausführungsformen des erfindungsgemäßen Kochhilfsmittels mit Dampföffnungen 4 versehen sein.

Die rechteckigen Ausführungsformen werden vorteilhafterweise mit den gleichen Flächengewichten, vorzugsweise eher der unteren Hälfte des angegebenen Wertebereiches, ausgeführt wie die runden Ausführungsformen, wobei hier nun das Gesamtgewicht zwischen etwa 600 und 4000 Gramm liegt.

## Patentansprüche

1. Kochhilfsmittel zum Niederdrücken des Kochgutes in einem Kochbehälter, auf einer Grillplatte oder beim Marinieren von Lebensmitteln, insbesondere während des Garvorganges, bestehend aus einer Grundplatte (1) aus wärmespeicherndem Material, vorzugsweise Edelstahl oder Chrom-Nickelstahl 18/10, welche Grundplatte (1) in Größe und Form an den Kochbehälter oder an Gastro-Norm-Behälter angepasst ist, und einem Griff (2, 3), **dadurch gekennzeichnet, daß** das Flächengewicht über die Grundplatte (1) des Kochhilfsmittels zwischen 2 und 4 g/cm² beträgt.

2. Kochhilfsmittel nach Anspruch 1, **dadurch gekennzeichnet, daß** in der Grundplatte (1) mehrere Dampföffnungen (4) vorgesehen sind, deren geringster Durchmesser mindestens 6 mm beträgt.

3. Kochhilfsmittel nach Anspruch 2, **dadurch gekennzeichnet, daß** die Gesamtfläche der Dampföffnungen (4) zwischen 2,5 und 6 % der Fläche der Grundplatte (4) ausmacht.

4. Kochhilfsmittel nach einem der Ansprüche 1 bis 3, **dadurch gekennzeichnet, daß** in der Grundplatte (1) ein Bolzen (2) aus Edelstahl mit einem glatten Ende eingeschweißt ist, welcher Bolzen (2) am gegenüberliegenden Ende ein Außengewinde aufweist.

5. Kochhilfsmittel nach Anspruch 4, **dadurch gekennzeichnet, daß** ein Griffstück (3) aus Edelstahl auf das Außengewinde des Bolzens (2) aufgeschraubt ist.

6. Kochhilfsmittel nach Anspruch 5, **dadurch gekennzeichnet, daß** das Griffstück (3) am Bolzen (2) dicht mit lebensmittelverträglichem Kleber verklebt ist.
